Europäisches Patentamt

European Patent Office

Office européen des brevets

(19)

(11) **EP 0 503 386 B1**

(12) **EUROPÄISCHE PATENTSCHRIFT**

(45) Veröffentlichungstag und Bekanntmachung des Hinweises auf die Patenterteilung:
**06.08.1997 Patentblatt 1997/32**

(51) Int Cl.[6]: **C08G 65/20**, C08G 65/10

(21) Anmeldenummer: **92103343.7**

(22) Anmeldetag: **27.02.1992**

(54) **Verfahren zur Herstellung von Polyoxyalkylenglykolen**

Procedure for the preparation of polyoxyalkyleneglycols

Procédé pour la préparation de polyalkylèneglycols

(84) Benannte Vertragsstaaten:
**BE DE ES FR GB IT NL**

(30) Priorität: **13.03.1991 DE 4108044**

(43) Veröffentlichungstag der Anmeldung:
**16.09.1992 Patentblatt 1992/38**

(73) Patentinhaber: **BASF AKTIENGESELLSCHAFT**
**67056 Ludwigshafen (DE)**

(72) Erfinder:
• **Weyer, Hans-Jürgen, Dr.**
**W-6800 Mannheim 1 (DE)**
• **Fischer, Rolf, Dr.**
**W-6900 Heidelberg (DE)**

• **Jeschek, Gerhard, Dr.**
**W-6718 Gruenstadt (DE)**
• **Merger, Franz, Dr.**
**W-6710 Frankenthal (DE)**
• **Mueller, Herbert, Dr.**
**W-6710 Frankenthal (DE)**

(56) Entgegenhaltungen:
**EP-A- 0 158 229** **EP-A- 0 185 553**
**EP-A- 0 239 787** **GB-A- 917 951**

• **MAKROMOL. CHEM., Bd.190, 1989 Seiten 929 - 938 BEDNAREK M. ET AL 'HETEROPOLYACIDS -NEW EFFICIENT INITIATORS OF CATIONIC POLYMERIZATION'**

EP 0 503 386 B1

**Beschreibung**

Die vorliegende Erfindung betrifft ein Verfahren zur Herstellung von Polyoxyalkylenglykolen auf der Basis von Tetrahydrofuran.

Polyoxyalkylenglykole, auch unter dem Namen Polyetherglykole bekannt, wie Polyoxybutylenglykole, auch als Polytetrahydrofurane (Poly-THF) bezeichnet, werden durch die kationische Polymerisation cyclischer Ether mit Hilfe von Brönstedt- oder Lewis-Säure-Katalysatoren hergestellt. Beispielsweise werden als Brönstedt-Säuren Fluorsulfonsäure (US-A 33 58 042) oder rauchende Schwefelsäure (US-A 37 12 930) verwendet. Die auf diese Weise hergestellten Polyoxyalkylenglykole haben jedoch den Nachteil, daß sie oftmals verfärbt sind und ihre Molekulargewichtsverteilung breit ist.

JP-A 83 028/1983 lehrt die Polymerisation von Tetrahydrofuran (THF) in Gegenwart eines Carbonsäurehalogenids oder -anhydrids, wobei eine Heteropolysäure unter wasserfreien Bedingungen benutzt wird. Dabei entstehen jedoch Poly-THF-Diester, deren Hydrolyse zu Poly-THF einen erhöhten Aufwand erfordert. Da bei der Hydrolyse pro Mol Poly-THF 2 Mol des betreffenden Carboxylats bzw. der betreffenden Säure freigesetzt werden, gelangen große Mengen dieser Carboxylate ins Abwasser oder müssen, falls dies verhindert werden soll, mit hohem Aufwand aus den Hydrolysatlösungen zurückgewonnen werden. Dadurch wird dieses Verfahren unwirtschaftlich.

Nach EP-A 126 471 werden wasserhaltige Heteropolysäuren als Katalysatoren zur Polymerisation von THF zu Poly-THF benutzt. Mit diesem Verfahren können Polyoxybutylenglykole mit einer engen Molekulargewichtsverteilung auf direktem Wege erhalten werden. Dabei wird normalerweise mit soviel Wasser gearbeitet, daß der Heteropolysäure-Katalysator als flüssige Phase vorliegt. Zur Durchführung der Polymerisation müssen die organische THF-Phase und die wäßrige Heteropolysäurephase intensiv durchmischt werden. Zur Gewinnung der Polyoxyalkylenglykole aus der organischen Phase muß diese zuerst von der Katalysatorphase abgetrennt werden, welche anschließend wieder verwendet werden kann. Die Phasentrennung zwischen der organischen Phase und der wäßrigen Katalysatorphase benötigt jedoch relativ lange Zeit, weshalb bei einer kontinuierlichen Ausgestaltung dieses Verfahrens mit großen Flüssigkeitsvolumina gearbeitet werden muß, um diesen Mangel auszugleichen, was wiederum einen erhöhten apparativen Aufwand zur Folge hat. Ein weiterer Nachteil dieses Verfahrens besteht darin, daß sich die als Katalysator verwendeten wäßrigen Heteropolysäurelösungen nach einiger Zeit unter Dunkelfärbung zersetzen. Diese Zersetzungsprodukte oder durch sie bewirkte Zersetzungsreaktionen in der organischen Phase, führen zu Polyoxyalkylenglykolen mit hoher Farbzahl.

Da Polyoxyalkylenglykole, insbesondere Poly-THF, wichtige Ausgangsstoffe zur Herstellung von elastischen Fasern, elastischen Konstruktionswerkstoffen und Beschichtungen, insbesondere von solchen auf Polyurethanbasis, sind, die Eigenschaften dieser Endprodukte aber stark von den Eigenschaften der zu ihrer Herstellung verwendeten Polyoxyalkylenglykole abhängt, insbesondere von deren mittlerem Molekulargewicht, deren Molekulargewichtsverteilung (Dispersität) und deren Farbzahl, lag der vorliegenden Erfindung die Aufgabe zugrunde, ein Verfahren zur Verfügung zu stellen, das die gezielte Herstellung von Polyoxyalkylenglykolen, insbesondere von Polyoxybutylenglykolen, bestimmter mittlerer Molmassen im Molekulargewichtsbereich von 500 bis 3500 Dalton und mit einer möglichst engen Molekulargewichtsverteilung auf wirtschaftliche Weise ermöglicht, ohne daß dabei die Nachteile der bisher bekannten Verfahren auftreten. Die so hergestellten Polyoxyalkylenglykole sollten sich durch eine niedrige Farbzahl auszeichnen.

Dementsprechend wurde ein Verfahren zur Herstellung von Polyoxyalkylenglykolen auf der Basis von Tetrahydrofuran gefunden, das dadurch gekennzeichnet ist, daß man Tetrahydrofuran oder Mischungen von Tetrahydrofuran mit insgesamt bis zu 95 mol-%, bezogen auf die eingesetzte Menge an Tetrahydrofuran, eines oder mehrerer Comonomerer aus der Gruppe der cyclischen Ether und Acetale in Abwesenheit von Wasser und in Gegenwart eines einwertigen Alkohols oder eine Monocarbonsäure mit Hilfe eines wasserfreien Heteropolysäure-Katalysators kontinuierlich in einem Zweiphasensystem polymerisiert, dabei einen Alkohol- oder Monocarbonsäuregehalt von 0,1 bis 15 mol/mol Heteropolysäure in der Katalysatorphase einstellt und aus den erhaltenen Polyoxyalkylenglykol-Monoethern oder Polyoxyalkylenglykol-Monoestern das Polyoxyalkylenglykol durch Spaltung der Monoether- oder Monoester-Bindung freisetzt.

Die auf dem Monomeren THF basierenden Polyoxyalkylenglykol-Monoether oder -Monoester können, soweit es deren Polyoxyalkylenglykol-Teil betrifft, aus THF oder THF und comonomeren, cyclischen Ethern und/oder Acetalen durch Ringöffnungspolymerisation hergestellt werden. Beispielsweise seien Ethylenoxid, Propylenoxid und andere substituierte Epoxide, wie Epichlorhydrin, 1,2-Butylenoxid, 2,3-Butylenoxid, Isobutylenoxid, Oxetan und Oxetanderivate, wie 3,3-Dimethyloxetan, 3,3-Bis-chlormethyl-oxetan, 5-gliedrige, cyclische Ether und Acetale, wie Methyltetrahydrofurane, 1,3-Dioxolan, 6-gliedrige, cyclische Ether, wie Tetrahydropyran, 1,4-Dioxan, 1,3-Dioxan, 7- und höhergliedrige, cyclische Ether, wie Oxepan, Kronenether und cyclische Oligomere des Tetrahydrofurans genannt. Selbstverständlich können auch Mischungen dieser Comonomere mit THF polymerisiert werden.

Im allgemeinen werden die Comonomeren in Mengen von insgesamt bis zu 95 mol-%, bevorzugt von 0,1 bis 30 mol-%, bezogen auf eingesetztes THF, verwendet. Besonders bevorzugt werden nach dem erfindungsgemäßen Verfahren jedoch Poly-THF-Monoether oder Monoester von einwertigen Alkoholen bzw. Monocarbonsäuren allein aus dem Monomer THF hergestellt.

Als Heteropolysäuren im Sinne der vorliegenden Erfindung werden anorganische Polysäuren mit mindestens 2 verschiedenen Zentralatomen verstanden, welche aus schwachen, mehrbasischen Sauerstoffsäuren eines Metalls, vorzugsweise aus den Sauerstoffsäuren des Chroms, Molybdäns, Vanadiums oder Wolframs und/oder den entsprechenden Oxiden dieser Metalle $CrO_3$, $MoO_3$, $V_2O_5$ bzw. $WO_3$ und denen eines anderen Metalls oder Nichtmetalls, beispielsweise Arsen, Bor, Jod, Phosphor, Selen, Silicium, Germanium oder Tellur, als gemischte, partielle Anhydride entstehen. In der Regel hat das Atomverhältnis zwischen den erstgenannten und den letztgenannten Elementen in diesen Heteropolysäuren den Wert 2,5 bis 12, vorzugsweise ist der Wert dieses Atomverhältnisses 9 oder 12.

Als Heteropolysäuren, welche im erfindungsgemäßen Verfahren Einsatz finden können, seien die folgenden Verbindungen beispielhaft genannt:
Dodecamolybdatophosphorsäure ($H_3PMo_{12}O_{40} \cdot nH_2O$), Dodecamolybdatokieselsäure ($H_4SiMo_{12}O_{40} \cdot nH_2O$), Dodecamolybdatocer(IV)säure ($H_8CeMo_{12}O_{42} \cdot nH_2O$), Dodecamolybdatoarsen(V)säure ($H_3AsMo_{12}O_{40} \cdot nH_2O$), Hexamolybdatochrom(III)säure ($H_3CrMo_6O_{24}H_6 \cdot nH_2O$), Hexamolybdatonickel(II)säure ($H_4NiMo_6O_{24}H_6 \cdot 5H_2O$), Hexamolybdatojodsäure ($H_5JMo_6O_{24} \cdot nH_2O$), Octadecamolybdatodiphosphorsäure ($H_6P_2Mo_{18}O_{62} \cdot 11H_2O$), Octadecamolybdatodiarsen(V)säure ($H_6As_2Mo_{18}O_{62} \cdot 25H_2O$), Nonamolybdatomangan(IV)säure($H_6MnMo_9O_{32} \cdot nH_2O$), Undecamolybdatovanadatophosphorsäure ($H_4PMo_{11}VO_{40} \cdot nH_2O$), Decamolybdatodivanadatophosphorsäure ($H_5Mo_{10}V_2O_{40} \cdot nH_2O$), Dodecavanadatophosphorsäure ($H_7PV_{12}O_{36} \cdot nH_2O$) Dodecawolframatokieselsäure ($H_4SiW_{12}O_{40} \cdot 7H_2O$), Dodecawolframatophosphorsäure ($H_3PW_{12}O_{40} \cdot nH_2O$), Dodecawolframatoborsäure ($H_5BW_{12}O_{40} \cdot nH_2O$), Octadecawolframatodiphosphorsäure ($H_6P_2W_{18}O_{62} \cdot 14H_2O$), Octadecawolframatodiarsen(V)säure ($H_6As_2W_{18}O_{62} \cdot 14H_2O$), Hexamolybdatohexawolframatophosphorsäure ($H_3PMo_6W_6O_{40} \cdot nH_2O$). Selbstverständlich können auch Mischungen von Heteropolysäuren eingesetzt werden. Vorzugsweise werden im erfindungsgemäßen Verfahren aufgrund ihrer einfachen Zugänglichkeit Dodecawolframatophosphorsäure, Dodecamolybdatophosphorsäure, Nonamolybdatophosphorsäure, Dodecamolybdatokieselsäure und Dodecawolframatokieselsäure eingesetzt.

Bevorzugt werden die freien Heteropolysäuren erfindungsgemäß angewandt, es ist aber auch möglich, deren Salze, insbesondere deren Alkalimetall- und Erdalkalimetallsalze als Katalysatoren zu benutzen. Die Heteropolysäuren und deren Salze sind bekannte Verbindungen und können nach bekannten Verfahren, beispielsweise nach den Methoden von Brauer (Herausgeber): Handbuch der Präparativen, Anorganischen Chemie, Band III, S. 1774-1798, Enke, Stuttgart, 1981 oder nach den Verfahren von Top. Curr. Chem. 76, 1 (1978), hergestellt werden.

Die so hergestellten Heteropolysäuren liegen im allgemeinen in hydratisierter Form vor und werden vor ihrer Verwendung im erfindungsgemäßen Verfahren vom darin enthaltenen, koordinativ gebundenen Wasser befreit. Diese Dehydratisierung kann vorteilhaft thermisch, beispielsweise nach dem Verfahren von Makromol. Chem. 190, 929 (1989) durchgeführt werden. Eine andere Möglichkeit zur Dehydratisierung der Heteropolysäuren besteht je nach verwendeter Heteropolysäure darin, daß man die Heteropolysäure in einem organischen Lösungsmittel, beispielsweise in einem Dialkylether oder Alkohol, löst, das Wasser mit dem organischen Lösungsmittel aus seiner koordinativen Bindung mit der Heteropolysäure verdrängt und azeotrop mit dem Lösungsmittel abdestilliert. Nach diesen Methoden hergestellte, wasserfreie Heteropolysäuren können als Katalysator direkt in das erfindungsgemäße Verfahren eingeführt werden.

Zur Herstellung der Polyoxyalkylenglykol-Monoether sind prinzipiell alle Arten von einwertigen Alkoholen einsetzbar, wie aliphatische, cycloaliphatische, beispielsweise Cyclohexanol, aromatische und araliphatische Alkohole, beispielsweise Benzylalkohol. Diese können weiterhin noch unter den Reaktionsbedingungen inerte Substituenten wie Alkylgruppen, Halogenatome oder Alkoxygruppen tragen. Desgleichen können ungesättigte, aliphatische oder cycloaliphatische Alkohole, beispielsweise Crotylalkohol oder Cyclohexenol, umgesetzt werden. Vorzugsweise werden im erfindungsgemäßen Verfahren jedoch einwertige, gesättigte, aliphatische, sekundäre oder tertiäre $C_3$- bis $C_{18}$-Alkohole, insbesondere $C_3$- bis $C_8$-Alkohole, benutzt. Besonders bevorzugt ist die Verwendung einwertiger, sekundärer oder tertiärer $C_3$- bis $C_5$-Alkohole, wie Isopropanol, tert. Butanol, 2-Butanol, 2-Pentanol, 2-Methyl-2-butanol. Die Verwendung des araliphatischen Alkohols Benzylalkohol ist ebenfalls besonders vorteilhaft.

Zur Herstellung der Polyoxyalkylenglykol-Monoester sind prinzipiell alle Arten von Monocarbonsäuren einsetzbar, wie aliphatische, cycloaliphatische, aromatische und araliphatische Carbonsäuren. Diese können weiterhin unter den Reaktionsbedingungen inerte Substituenten wie Alkylgruppen, Halogenatome oder Ethergruppen tragen. Desgleichen können vorteilhaft ungesättigte aliphatische oder cycloaliphatische Carbonsäuren umgesetzt werden.

Zweckmäßigerweise werden im erfindungsgemäßen Verfahren jedoch aliphatische $C_1$- bis $C_{18}$-Monocarbonsäuren sowie aromatische Monocarbonsäuren, wie Benzoesäure, benutzt. vorzugsweise werden aliphatische $C_1$- bis $C_8$-Monocarbonsäuren sowie Benzoesäure verwendet. Besonders bevorzugt ist die Verwendung von $C_1$- bis $C_4$-Monocarbonsäuren, wie Ameisensäure, Essigsäure, Propionsäure, Buttersäure, Pivalinsäure, Acrylsäure oder Methacrylsäure.

unter der Bezeichnung "mittleres Molekulargewicht" oder "mittlere Molmasse" wird in dieser Anmeldung das Zahlenmittel $M_n$ des Molekulargewichts der im gebildeten Polymerisat enthaltenen Polymeren verstanden.

Der Alkohol- bzw. der Carbonsäuregehalt der Reaktionsmischung beeinflußt das mittlere Molekulargewicht des entstehenden Polymerisates. In der Regel gilt, daß je höher der Gehalt an einwertigem Alkohol oder an Monocarbonsäure in der Reaktionsmischung ist, desto niedriger das mittlere Molekulargewicht des entstehenden Polymerisates ausfällt. Dementsprechend nimmt das mittlere Molekulargewicht des erzeugten Polymeren bei abnehmendem Alkohol- bzw. Carbonsäuregehalt der Reaktionsmischung zu. Bei sehr geringen Alkohol- oder Carbonsäuregehalten der Reaktionsmischung können vermehrt cyclische Oxyalkylenoligomere gebildet werden.

Des weiteren beeinflußt der Alkohol- bzw. Carbonsäuregehalt der Reaktionsmischung deren Phasenverhalten. Bei hohen Alkohol- bzw. Carbonsäuregehalten besteht die Reaktionsmischung aus einer homogenen Phase, wodurch später bei der Aufarbeitung die Abtrennung des Katalysators erschwert werden kann. Bei sehr niedrigen Alkohol- bzw. Carbonsäuregehalten wird die Heteropolysäure nicht mehr vollständig von der Reaktionsmischung gelöst. Im erfindungsgemäßen Verfahren wird mit solchen Alkohol- bzw. Carbonsäuregehalten der Reaktionsmischung gearbeitet, bei denen sich zwei homogene, flüssige Phasen im Reaktionsgemisch bilden, wobei die schwerere untere Phase den größten Teil des Heteropolysäure-Katalysators und des Alkohols bzw. der Carbonsäure neben monomerem Ausgangsmaterial und frisch gebildetem Polymer enthält und wobei die leichtere, obere Phase neben Restmengen an Alkohol bzw. Carbonsäure und Katalysator im wesentlichen aus dem monomeren Ausgangsmaterial und darin gelöstem Polymer zusammengesetzt ist.

Im erfindungsgemäßen Verfahrens wird mit Alkohol- bzw. Carbonsäuregehalten von 0,1 bis 15 mol, vorzugsweise mit 1 bis 8 mol Alkohol bzw. Carbonsäure/mol Heteropolysäure gearbeitet. Da bei der kontinuierlichen Betriebsweise des erfindungsgemäßen Verfahrens ein Teil des bzw. der in der oberen, im wesentlichen Produkt- und Monomer-haltigen Phase gelösten Alkohols bzw. Carbonsäure laufend, zusammen mit dem Produkt aus dem Reaktor ausgetragen wird, der bzw. die in der unteren, im wesentlichen Katalysator-haltigen Phase befindliche Alkohol bzw. Carbonsäure aber bei der Herstellung des Polyoxyalkylenglykol-Monoethers bzw. Monoesters verbraucht wird, ist es vorteilhaft, die Alkohol- bzw. Carbonsäurezufuhr zur Reaktionsmischung zwecks Ergänzung des bzw. der verbrauchten und ausgetragenen Alkohols bzw. Carbonsäure so zu steuern, daß sich die obengenannten Konzentrationsverhältnisse in der Katalysatorphase einstellen. Unter diesen Bedingungen bildet sich das oben beschriebene Reaktionssystem aus zwei homogenen, flüssigen Phasen aus, in dem Polyoxyalkylenglykol-Monoether bzw.

Monoester praktisch beliebiger mittlerer Molmassen, insbesondere jedoch solche Polyoxyalkylenglykol-Monoether bzw. Monoester mit mittleren Molmassen von mehr als 500 Dalton und besonders bevorzugt die Polyoxyalkylenglykol-Monoether bzw. Monoester mit den wirtschaftlich besonders wichtigen mittleren Molmassen im Bereich von 600 bis 3500 Dalton, gezielt und mit guter Selektivität hergestellt werden können.

Es wurde gefunden, daß es zur Herstellung von Polyoxyalkylenglykol-Monoethern bzw. Monoestern bestimmter mittlerer Molmassen, beispielsweise der mittleren Molmassen von 500 bis 3500, und einer engen Molekulargewichtsverteilung beim kontinuierlichen Verfahren vorteilhaft ist, daß die zur Herstellung eines solchen Polymeren erforderliche Alkohol- bzw. Carbosäurekonzentration in der Katalysatorphase soweit als möglich konstant gehalten wird. Es wird daher im kontinuierlichen Verfahren vorteilhaft so vorgegangen, daß der Alkohol bzw. die Carbonsäure im Reaktionsgemisch, entsprechend seinem bzw. ihrem Verbrauch bei der Umsetzung, unter Berücksichtigung des bzw. der zusammen mit der Produkthaltigen Oberphase ausgetragenen Alkohols bzw. Carbonsäure, laufend durch Zuführung frischen(r) oder rückgeführten(r) Alkohols bzw. Carbonsäure in der Weise ergänzt wird, daß die Alkoholkonzentration in der Katalysatorphase weitgehend konstant gehalten wird.

Allerdings stand bislang kein verläßliches Verfahren zur Verfügung, nach dem die Alkohol- bzw. die Carbonsäurekonzentration in der konzentrierten, Heteropolysäure-haltigen Katalysatorphase gemessen werden konnte, insbesondere gab es kein Meßverfahren, nach dem die Alkohol- bzw. Carbonsäurekonzentration in dieser Katalysatorphase hinreichend schnell und genau gemessen werden konnte, um die Zufuhr frischen Alkohols bzw. frischer Carbonsäure entsprechend den Anforderungen eines kontinuierlichen, industriellen Verfahrens über eine damit gekoppelte Analogsteuerung regeln zu können.

Es wurde gefunden, daß die Konzentration des Alkohols bzw. der Carbonsäure in der Katalysatorphase vorteilhaft durch die Messung der elektrischen Leitfähigkeit der flüssigen Katalysatorphase ermittelt werden kann. Die Messung der elektrischen Leitfähigkeit kann beispielsweise mit Hilfe der Techniken, Schaltungen und Meßanordnungen, wie sie von T. und L. Shedlovsky in A. Weissberger, B.W. Rossiter (Ed.) Techniques of Chemistry, Band I, Seite 163-204, Wiley-Interscience, New York, 1971, beschrieben sind, im erfindungsgemäßen Verfahren durchgeführt werden. Die Konzentration des betreffenden Alkohols bzw. der betreffenden Carbonsäure in der Katalysatorphase läßt sich einfach mit Hilfe des erhaltenen Leitfähigkeitsmeßwertes anhand einer vorher aufgestellten Eichkurve feststellen. In der Regel ist es zweckmäßig, für die unterschiedlichen, angewandten Alkohol- bzw. Carbonsäure-Heteropolysäure-Systeme individuelle Eichkurven zu erstellen. Da die Leitfähigkeitsmessung ein elektrisches Meßverfahren ist, kann die Meßeinrichtung sehr einfach mit der Alkohol- bzw. Carbonsäuredosiervorrichtung zum Zwecke der Analogsteuerung der Alkohol- bzw. Carbonsäurezugabe gekoppelt werden. Dieses kombinierte Meß- und Dosierverfahren wirkt sich sehr vorteilhaft auf die Produktqualität aus.

Das mittlere Molekulargewicht des im erfindungsgemäßen Verfahren gebildeten Polyoxyalkylen-Monoethers bzw. -Monoesters ist nicht allein von der Menge des zugesetzten Heteropolysäurekatalysators und des Alkohols bzw. der Carbonsäure abhängig, sondern wird auch von der Art der verwendeten Heteropolysäure und des eingesetzten Alkohols bzw. der eingesetzten Carbonsäure beeinflußt.

Beispielsweise wird unter ansonsten gleichen Bedingungen bei der Umsetzung von THF und Isopropanol mit wasserfreier Dodecawolframatophosphorsäure ein Polymer mit einer mittleren Molmasse von 1900 gefunden, wohingegen bei der Verwendung von Dodecawolframatokieselsäure ein Polymer mit einer mittleren Molmasse von 1500 gebildet wird und bei Verwendung von Ethanol als einwertigem Alkohol wird Poly-THF-Monoethylether der mittleren Molmasse 1900 erhalten, dieweil mit Hexadecanol-1 ein Poly-THF-Monohexadecylether der mittleren Molmasse 3600 entsteht.

Durch die Variierung der Menge und Art der verwendeten Heteropolysäure bzw. des einwertigen Alkohols lassen sich so Polyoxyalkylenglykol-Monoether mit einem bestimmten mittleren Molekulargewicht und gleichzeitig einer relativ engen Molekulargewichtsverteilung maßgeschneidert herstellen. Die Einstellung dieser Verfahrensparameter läßt sich in der Regel mit einigen wenigen Routineversuchen optimieren.

Analog wird unter ansonsten gleichen Bedingungen bei der Umsetzung von THF und Ameisensäure mit wasserfreier Dodecawolframatophosphorsäure ein Polymer mit einer mittleren Molmasse von 1500 erhalten, wohingegen bei Verwendung von Benzoesäure ein Polymer mit einer mittleren Molmasse von 2900 gebildet wird und bei Verwendung von Essigsäure als Carbonsäure zusammen mit Dodecamolybdatophosphorsäure wird ein Poly-THF-Monoacetat der mittleren Molmasse 1800 gewonnen, wohingegen mit Dodecawolframatokieselsäure ein Poly-THF-Monoacetat der mittleren Molmasse 2000 entsteht.

Durch die Variierung der Reaktionsparameter Menge, Art der verwendeten Heteropolysäure und Carbonsäure lassen sich somit auch Polyoxyalkylenglykol-Monoester mit einem bestimmten, mittleren Molekulargewicht und gleichzeitig einer relativ engen Molekulargewichtsverteilung maßgeschneidert herstellen.

Die Heteropolysäure wird in Mengen von 10 bis 300 Gew.-Teilen, vorzugsweise von 50 bis 150 Gew.-Teilen, bezogen auf 100 Gew.-Teile des verwendeten Monomerengemischs oder 100 Gew.-Teile Tetrahydrofuran eingesetzt. Es ist auch möglich größere Mengen des Heteropolysäure-Katalysators einzusetzen.

Die Heteropolysäure kann in fester Form der Umsetzung zugeführt werden, worauf sie durch das Inkontaktbringen mit den weiteren Reaktanten nach und nach unter Ausbildung der flüssigen Katalysatorphase solvatisiert wird. Man kann auch so verfahren, daß man die feste Heteropolysäure mit dem zu verwendenden Alkohol bzw. der zu verwendenden Carbonsäure und/oder dem zu verwendendem Monomer anmaischt und die dabei erhaltene Katalysatorlösung als flüssige Katalysatorphase in den Reaktor leitet. Dabei kann sowohl die Katalysatorphase als auch das monomere Ausgangsmaterial im Reaktor vorgelegt werden. Es können aber auch beide Komponenten gleichzeitig in den Reaktor eingeleitet werden.

Die Polymerisation wird üblicherweise bei Temperaturen von 0 bis 150°C, vorzugsweise bei 30 bis 80°C vorgenommen. Vorteilhaft wird dabei unter Atmosphärendruck gearbeitet, die Umsetzung unter Druck, vornehmlich unter dem Eigendruck des Reaktionssystems, kann sich aber gleichfalls als zweckmäßig und vorteilhaft erweisen.

Da die Polymerisation in einem Zweiphasensystem durchgeführt wird, muß für eine gute Durchmischung der beiden Phasen gesorgt werden. Dazu ist es erforderlich, daß die Reaktoren sowohl bei der chargenweisen als auch bei der kontinuierlichen Verfahrensweise mit leistungsfähigen Mischeinrichtungen, beispielsweise Rührwerken, ausgestattet sind.

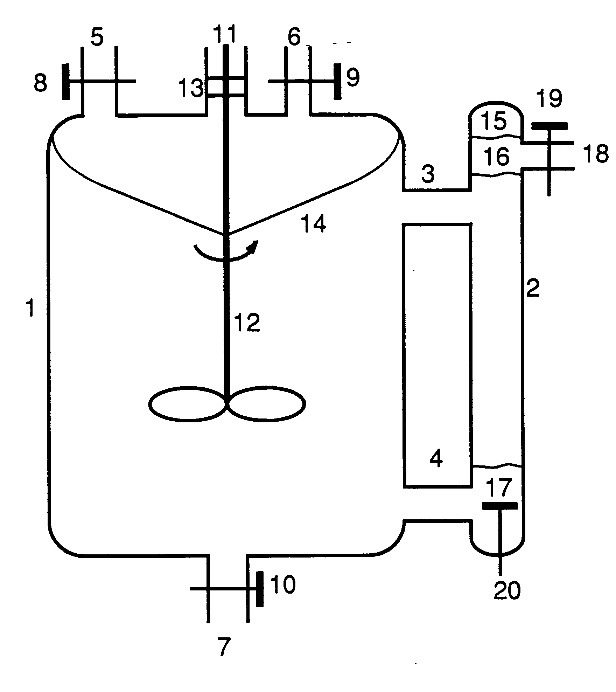

Die Umsetzung kann in herkömmlichen, für kontinuierliche Verfahren geeigneten Reaktoren oder Reaktoranordnungen, beispielsweise in Rohrreaktoren, welche mit Innenausbauten ausgestattet sind, die eine gute Durchmischung des Zweiphasensystems gewährleisten oder aber auch in Rührkesselkaskaden ausgeführt werden, wobei sich an die Umsetzung noch die kontinuierliche Abscheidung der Katalysatorphase von der Monomer- und Produkt-haltigen Oberphase anschließt. Vorteilhaft wird im erfindungsgemäßen Verfahren eine Apparatur eingesetzt, wie sie in der Figur schematisch dargestellt ist.

Bei dieser Apparatur handelt es sich um einen mit einem Phasenabscheider 2 kombinierten Rührkessel 1, von ansonsten an und für sich herkömmlicher Bauart, der entweder mit Außen- oder Innenheizung ausgerüstet sein kann und mit in der Regel separaten Einlaßstutzen 5 für die Zuleitung der einzelnen Reaktanten und die Begasung mit Inertgas versehen ist. In der Figur wurde der Übersichtlichkeit wegen auf die Darstellung der Kesselheizung verzichtet und nur ein Einlaßstutzen 5, stellvertretend für alle weiteren, eingezeichnet. Des weiteren sind an den Reaktor eine Vorrichtung zum Druckausgleich 6 und ein Ablaßstutzen 7 angebaut. Alle diese Vorrichtungen sind mit separaten Steuervorrichtungen 8,9 und 10, beispielsweise Schiebern oder Ventilen, versehen, welche das Öffnen und Schließen dieser Stutzen sowie die Regelung des Zulaufs ermöglichen. Der Reaktor ist mit einem Rührwerk 12 versehen, welches durch die mit der Buchse 13 abgedichtete Führung 11 nach außen verbunden ist. Mit dem Phasenabscheider 2 steht der Rührkessel 1 über die etwa in Höhe des oberen bzw. unteren Drittels angebrachten Zuführungen 3 bzw. 4 in Verbindung. Die bei der Umsetzung erhaltene Produktlösung wird über den Auslaßstutzen 18, welcher zweckmäßigerweise oberhalb der Zuführung 3 angebracht ist, aus der Apparatur abgezogen. Der Abfluß der Produktlösung wird über die Steuervorrichtung 19, die z.B. ein Schieber oder ein Ventil sein kann, geregelt.

Zum Betrieb dieser kontinuierlichen Apparatur werden die Reaktanten im Reaktor vorgelegt und bei der gewünschten Reaktionstemperatur mit dem Rührwerk 12 intensiv durchmischt, wobei eine emulsionsartige Mischung aus Katalysatorphase und Oberphase entsteht. Die durch das Rührwerk im Reaktionsgemisch erzeugte Strömung hat zur Folge, daß die emulsionsartige Mischung über die Zuführung 3 in den Phasenabscheider 2 gelangt, worin sich die Katalysatorphase und die Monomer- und Produkt-haltige Oberphase aufgrund ihrer unterschiedlichen Dichten entmischen. Dabei scheiden sich etwa oberhalb der Linie 16 und unterhalb der Linie 17 aus der trüben, emulsionsartigen Reaktionsmischung die klare, farblose, Produkt-haltige Oberphase bzw. die je nach verwendeter Heteropolysäure unterschiedlich gefärbte, klare Katalysatorphase ab. Die Produktphase wird über den Auslaß 18 abgezogen, dieweil die Katalysatorphase über die Zuführung 4 infolge des vom Rührwerk 12 erzeugten Sogs wieder in den Rührkessel zurückfließt und dort erneut mit der Monomer- und Produkt-haltigen Oberphase verwirbelt wird. Die Linien 14 und 15 bezeichnen den ungefähren Flüssigkeitsmeniskus bzw. -pegel in Rührkessel bzw. Phasenabscheider während des Betriebs. Über die Einfüllstutzen 5 wird frisches Monomer und frischer Alkohol bzw. frische Carbonsäure in den Rührkessel eingetragen. Dabei wird die Alkohol- bzw. Carbonsäurezufuhr mit Hilfe der in die flüssige Katalysatorphase eintauchenden Leitfähigkeitsmeßzelle 20 so gesteuert, daß der gewünschte Alkohol- bzw. Carbonsäuregehalt in der Katalysatorphase im Rahmen der Regelgenauigkeit konstant bleibt.

Frisches Monomer wird üblicherweise über eine Füllstandsregelung gesteuert in den Reaktor eindosiert. Zweckmäßigerweise wird frisches Monomer in dem Maße zugeführt, wie Produkt und nicht umgesetztes Monomer aus der Reaktionsapparatur ausgetragen werden. Auf diese Weise kann auch die Verweilzeit, mithin die Polymerisationszeit, gesteuert werden, womit ein weiteres Mittel zur Beeinflussung und Einstellung des mittleren Molekulargewichtes des entstehenden Polymeren zur Verfügung steht. Im allgemeinen wird die Polymerisation in Abhängigkeit von der Katalysatormenge und der Reaktionstemperatur beim chargenweisen Verfahren während eines Zeitraumes von 0,5 bis 50 Stunden, vorzugsweise von 1 bis 10 Stunden und besonders bevorzugt von 1 bis 8 Stunden durchgeführt. Beim kontinuierlichen Verfahren werden üblicherweise Verweilzeiten von 1 bis 8 und vorzugsweise von 2 bis 5 Stunden eingestellt. Zu Beginn der kontinuierlichen Umsetzung benötigt das beschriebene Reaktionssystem eine gewisse Zeit bis sich ein stationäres Gleichgewicht eingestellt hat und während der es vorteilhaft sein kann, den Auslaß 18 mit Hilfe der Steuervorrichtung 19 geschlossen zu halten, also keine Produktlösung aus der Reaktionsapparatur auszutragen.

Die Katalysatorphase verbleibt in der Reaktionsapparatur und wird entsprechend den Katalysatorverlusten, die durch den Austrag geringer Katalysatormengen mit der Produkt-haltigen Oberphase entstehen, laufend durch Zufuhr neuen und/oder gegebenenfalls durch die Rückführung des ausgetragenen Katalysators ergänzt.

Wird zur Herstellung der Poly-THF-Monoether bzw. -Monoester ein Heteropolysäure-Heterogenkatalysator verwendet, kann dieser als Suspensionskatalysator, vorzugsweise aber als Festbettkatalysator eingesetzt werden. Bei Verwendung eines Festbettkatalysators kann die Reaktionsmischung in der Sumpf- oder Rieselfahrweise über den Heteropolysäure-Heterogenkatalysator geleitet werden.

Das Verfahren zur erfindungsgemäßen Herstellung der Poly-THF-Monoether bzw.- Monoester wird vorteilhaft unter einer Inertgasatmosphäre durchgeführt, wobei beliebige Inertgase, wie Stickstoff oder Argon, verwendet werden können. Die Reaktanten werden vor ihrer Verwendung von gegebenenfalls darin enthaltenem Wasser und Peroxiden befreit.

Der Zusatz von unter den Reaktionsbedingungen inerten, organischen Lösungsmitteln, beispielsweise aliphatischen und aromatischen Kohlenwasserstoffen sowie halogenierten Kohlenwasserstoffen ist möglich und kann sich dahingehend vorteilhaft auswirken, daß die Phasentrennung von Katalysator- und Oberphase erleichtert wird. In der Regel dient im erfindungsgemäßen Verfahren das Monomere sowohl als Reaktant als auch als Lösungsmittel.

Die Polymerisat-haltige obere Phase kann direkt also ohne zusätzliche Aufarbeitung, zu den betreffenen Polyoxyalkylenglykolen weiterverarbeitet werden, die darin enthaltenen Poly-THF-Monoether bzw. -Monoester können aber auch vor ihrer Weiterverarbeitung im erfindungsgemäßen Verfahren in einer besonderen Aufarbeitungsstufe isoliert werden.

Die Aufarbeitung der Polymerisat-haltigen oberen Phase kann z.B. auf die Weise erfolgen, daß man darin enthaltene Heteropolysäure-Spuren durch Zusatz einer Base, beispielsweise Alkalimetall- oder Erdalkalimetall-Hydroxidlösungen, Ammoniak, Alkalimetall- oder Erdalkalimetallcarbonatlösungen oder -hydrogencarbonatlösungen neutralisiert, das darin enthaltene Monomer abdestilliert und den im Destillationsrückstand verbliebenen Polyoxyalkylenglykol-Monoether bzw. -Monoester zur Abtrennung ausgefallener Salze filtriert. Das bei der Destillation zurückgewonnene Monomer kann selbstverständlich wieder in die Umsetzung zurückgeführt werden.

Die auf diese Weise erhältlichen Polyoxyalkylenglykol-Monoether bzw. -Monoester oder die sie erhaltende aus dem Polymerisationsreaktor ausgetragene Polymerisat-haltige Oberphase können dann durch die Spaltung der Monoether- bzw. Monoesterbindung in die betreffenden Polyoxyalkylenglykole überführt werden.

Sowohl die Monoether- als auch die Monoester-Gruppen können auf verschiedenerlei Weise vom Polyoxyalkylenrest abgespalten werden.

Die Umwandlung der Polyoxyalkylenglykol-Monoether in die betreffenden Polyoxyalkylenglykole kann beispielsweise vorteilhaft mit Hilfe sauer wirkender Katalysatoren, wie Brönstedt- oder Lewis-Säuren, katalysiert werden. Geeignete Lewis-Säuren sind beispielsweise Bortrihalogenid-Etherate oder Alkoholate, Titantetrachlorid, Zirkoniumtetrachlorid, Zinn(II)chlorid, Siliciumtetrachlorid, Zinkchlorid.

Vorzugsweise werden zu diesem Zweck Brönstedt-Säuren oder wie Brönstedt-Säuren wirkende Feststoffe verwendet. Beispielsweise seien hierfür die folgenden Klassen genannt:

Saure Ionenaustauscher, wie sulfonierte Styrol-Divinylbenzol-Harze, sulfonierte Phenol-Formaldehyd-Harze, Nafion®-Harze, sulfonierte Kohlen, Silikate wie Montmorillonite, Bleicherden, Tonmineralien, natürliche Zeolithe, wie Faujasite, Erionite, Chabasite und Mordenite, synthetische Zeolithe wie die Zeolith-Typen A, L, X, Y, T und die Pentasile, nichtoxidierende Mineralsäuren, wie Flußsäure, Salzsäure, verdünnte Schwefelsäure, Phosphorsäure, Tetrafluoroborsäure, Carbonsäuren, wie Ameisensäure, Trichloressigsäure, Trifluoressigsäure, organische Sulfonsäuren wie Methansulfonsäure, Benzolsulfonsäure, Toluolsulfonsäure, 4-Brombenzolsulfonsäure, 4-Trifluormethylbenzolsulfonsäure, Trifluormethylsulfonsäure, Kationsäuren, wie wäßrige Eisen(II)sulfat-, Kupfer(II)-sulfat-, Zinksulfat-, Eisen(II)chlorid-, Aluminiumsulfat-Lösungen, saure Salze, wie Kaliumhydrogensulfat, Natriumhydrogensulfat, Natriumdihydrogenphosphat, saure Aluminiumphosphate oder deren wäßrige Lösungen, aber auch Heteropolysäuren, wie sie als Katalysatoren zur Polymerisation der cyclischen Ether verwendet werden können.

Bei der Anwendung dieser Säuren ist darauf zu achten, daß diese bezüglich des betreffenden Polyoxyalkylenglykol-Derivates nicht zu konzentriert angewendet werden, damit keine nennenswerte Depolymerisation der Polyoxyalkylenglykole eintritt. Die anzuwendenden Konzentrationen sind je nach Säure verschieden, und die optimale Konzentration für die jeweils angewandte Säure läßt sich anhand weniger, einfacher Vorversuche leicht ermitteln.

Besonders bevorzugt werden im erfindungsgemäßen Verfahren Salzsäure, Schwefelsäure, Phosphorsäure sowie saure Ionenaustauscher, Bleicherden, Tonmineralien und die zur Polymerisation verwendeten Heteropolysäuren benutzt. Vorteilhaft werden Polyoxyalkylenglykol-Monoether zur Herstellung der betreffenden Polyoxyalkylenglykole eingesetzt, deren Monoethergruppe aus einem sekundären oder tertiären Alkohol, insbesondere aus Isopropanol oder tert.-Butanol oder von Benzylalkohol stammt. Aus den Polyoxyalkylenglykol-tert.-Butyl- oder Benzylethern lassen sich die betreffenden Polyoxyalkylenglykole säurekatalysiert besonders leicht freisetzen. Dabei entstehen aus den Polyoxyalkylenglykol-Monoethern mit sekundären bzw. tertiären Alkoholen neben dem gewünschten polymeren Glykol hauptsächlich die von diesen Alkoholen abgeleiteten Olefine, die leicht destillativ abgetrennt werden können, insbesondere die aus dem betreffenden Isopropyl- bzw. tert.-Butylethern abgespaltenen Olefine Propen bzw. Isobuten, welche gewünschtenfalls in einer weiteren Stufe durch Addition von Wasser in die betreffenden Alkohole zurückverwandelt und in die Polymerisationsreaktion zurückgeführt werden können.

Die Spaltung der Monoetherbindung kann diskontinuierlich, beispielsweise im Rührkessel oder kontinuierlich, beispielsweise in einem Rohrreaktor, durchgeführt werden. Bei der kontinuierlichen Ausgestaltung des Verfahrens werden vorzugsweise feste, saure Katalysatoren, wie Ionenaustauscher, Bleicherden, Tonmineralien usw. verwendet, die zweckmäßigerweise in einer Festbettanordnung im Reaktor angebracht sind, wodurch auf eine Verfahrensstufe zur Katalysatorabtrennung verzichtet werden kann.

Besonders vorteilhaft gestaltet sich die Freisetzung des Polyoxyalkylenglykols aus seinem Monoetherderivat, wenn diese durch ggf. noch im Austrag der Polymerisationsreaktion vorhandene Spuren an Heteropolysäure-Katalysator katalysiert wird. Dabei wird unter den Bedingungen, welche zur destillativen Abtrennung des Monomeren und des restlichen Alkohols erforderlich sind, durch die Heteropolysäure die Spaltung der Monoetherbindung katalysiert, und man erhält das gewünschte Polyoxyalkylenglykol als Sumpfprodukt der Destillation. Die darin enthaltenen Heteropolysäurespuren können daraus ohne großen Aufwand, beispielsweise mittels Ionenaustauschern oder nach Neutralisation durch Extraktion mit Wasser entfernt werden.

Ansonsten kann die Spaltung der Monoethergruppe bei Temperaturen von 0 - 200°C, insbesondere von 70 - 150°C bei Atmosphärendruck oder unter dem Eigendruck des Reaktionssystems, vorzugsweise aber bei vermindertem Druck, insbesondere bei Drucken von 0,1 - 100 mbar, durchgeführt werden. Die Etherspaltung kann in An- oder Abwesenheit von unter den Reaktionsbedingungen inerten Lösungsmitteln wie Wasser, Alkoholen oder halogenierten Kohlenwasserstoffen vorgenommen werden.

Dienen Polyoxyalkylenglykol-Benzylether als Vorstufe zur Herstellung der Polyoxyalkylenglykole im erfindungsgemäßen Verfahren, dann können diese gewünschtenfalls auch hydrogenolytisch aus dem betreffenden Benzylether freigesetzt werden, wobei aus der Benzylgruppe Toluol gebildet wird. Für dieses Verfahren, welches unter besonders schonenden Bedingungen abläuft, können an sich herkömmliche, gewünschtenfalls auf einem Träger, wie Aktivkohle, aufgebrachte Hydrierkatalysatoren, wie Raney-Nickel, Raney-Kobalt, Platin, Palladium, verwendet werden. Zweckmäßigerweise wird dabei mit einem Wasserstoffdruck von 1 bis 350 bar, insbesondere von 1 bis 10 bar und bei Temperaturen von 0 bis 200, insbesondere von 20 bis 50°C gearbeitet.

Die erfindungsgemäß hergestellten Polyoxyalkylenglykol-Monoester können ebenfalls säurekatalysiert in die betreffenden Polyoxyalkylenglykole gespalten werden. Vorzugsweise wird dabei in Gegenwart von Wasser oder eines Alkohols, insbesondere eines $C_1$- bis $C_4$-Alkohols, gearbeitet, wobei der betreffende Polyoxyalkylenglykol-Monoester zum polymeren Glykol und der betreffenden Carbonsäure hydrolysiert oder zum polymeren Glykol und dem betreffenden niedermolekularen Carbonsäureester umgeestert wird. Die bei dieser Verfahrensweise freigesetzte Carbonsäure kann destillativ vom Polyoxyalkylenglykol abgetrennt und gewünschtenfalls in die Polymerisationsreaktion zurückgeführt werden, sie kann aber auch mittels Ionenaustauschern oder nach Neutralisation mit einer Base, extraktiv aus dem Polyoxyalkylenglykol entfernt werden. Die bei der Umesterung neu gebildeteten, niedermolekularen Carbonsäureester werden vorzugsweise destillativ aus der Reaktionsmischung abgezogen.

Die säurekatalysierte Polyoxyalkylenglykol-Monoesterhydrolyse oder -umesterung kann bei Temperaturen von 0 bis 300°C, insbesondere bei 70 bis 150°C, unter Atmosphärendruck oder dem Eigendruck des Reaktionssystems, vorzugsweise aber bei vermindertem Druck, insbesondere bei Drucken von 0,1 bis 100 mbar, ausgeführt werden.

Vorzugsweise werden die erfindungsgemäß hergestellten Polyoxyalkylenglykol-Monoester aber mittels Mineralbasen, wie den wäßrigen Lösungen der Alkalimetallhydroxide, Alkalimetallcarbonate, Erdalkalimetallhydroxide oder ggf. Carbonate, oder wäßrigen ammoniakalischen Lösungen hydrolysiert, wobei neben den gewünschten Polyoxyalkylenglykolen die betreffenden Carboxylate anfallen. Letztere können durch Behandlung der Hydrolysate mit herkömmlichen Ionenaustauschern oder auch durch Extraktion mit Wasser entfernt werden. Die alkalische Hydrolyse der Polyoxyalkylenglykol-Monoester wird zweckmäßigerweise bei Temperaturen von 0 bis 150°C, insbesondere von 20 bis 80°C, unter Atmosphärendruck oder dem Eigendruck des Reaktionssystems vorgenommen.

Vorteilhaft können die Polyoxyalkylenglykol-Monoester auch in nichtwäßrigen alkoholischen Lösungen in Gegenwart von Alkalimetallalkoholaten als Katalysatoren solvolysiert. Die Alkalimetallalkoholate können als solche in Substanz der Reaktionsmischung zugesetzt oder aber auch in situ erzeugt werden, beispielsweise durch die Umsetzung eines Alkalimetalls oder eines Alkalimetallhydrids mit der alkoholischen Reaktionslösung. Die Art der Alkalimetallkomponente ist für den Erfolg der Umsetzung in der Regel nicht kritisch. Als Alkoholat-Komponente wird zweckmäßigerweise das Alkoholat des verwendeten alkoholischen Lösungsmittels eingesetzt. Als alkoholische Lösungsmittel und gleichzeitig als Reaktanten eignen sich bei diesem Solvolyseverfahren niedere Alkohole, wie $C_1$- bis $C_{10}$-Alkohole, insbesondere jedoch $C_1$- bis $C_4$-Alkohole und am besten Methanol. Die Alkohole werden bezüglich des Polyoxyalkylenglykol-Monoesters in Mengen von 0,1 bis 20 Gew.-%, vorteilhaft von 1 bis 5 Gew.-% eingesetzt. Die Solvolyse kann in Gegenwart von unter den Reaktionsbedingungen inerten Lösungsmitteln durchgeführt werden. Die im Zuge der Umesterung gebildeten niedermolekularen Ester werden vorteilhaft laufend aus dem Solvolysegemisch abdestilliert, dabei kann sowohl unter Atmosphärendruck als auch unter vermindertem Druck gearbeitet werden. Die alkalimetallalkoholatkatalysierte Polyoxyalkylenglykol-Monoester-Solvolyse kann bei Temperaturen von 0 bis 150°C, vorzugsweise bei 20 bis 100°C, unter Atmosphärendruck oder dem Eigendruck des Reaktionssystems oder bevorzugt, unter vermindertem Druck ausgeführt werden. Nach beendeter Solvolyse kann der Alkoholat-Katalysator hydrolysiert und die Reaktionsmischung nach üblichen Methoden aufgearbeitet werden.

Weiterhin können die Polyoxyalkylenglykole aus den erfindungsgemäß hergestellten Polyoxyalkylenglykol-Monoestern hydrogenolytisch freigesetzt werden. Dabei werden neben den Polyoxyalkylenglykolen aus den betreffenden Carbonsäuren durch Reduktion die entsprechenden einwertigen Alkohole gebildet, die aus dem Hydriergemisch abdestilliert werden können. Die Polyoxyalkylenglykol-Monoester werden in der Regel bei Temperaturen von 100 bis 300°C, insbesondere bei 150 bis 250°C hydriert, wobei Wasserstoffdrucke von 50 bis 350, bevorzugt von 150 bis 300 bar angewandt werden. Als Hydrierkatalysatoren können übliche, gewünschtenfalls auf einen Träger, wie Aktivkohle, aufgebrachte Hydrierkatalysatoren, wie Raney-Nickel, Raney-Kobalt, Platin, Palladium oder die Hydrierkatalysatoren, wie sie in EP-A 158 835 und Houben-Weyl, Methoden der organischen Chemie; Bd. 4/2; 4. Auflage; S. 318-322; Thieme, Stuttgart 1955 beschrieben sind, verwendet werden.

Eine besondere Möglichkeit zur Freisetzung der Polyoxyalkylenglykole aus ihren Monoestern besteht in der Decarbonylierung der Polyoxyalkylenglykol-Monoformiate. Diese Decarbonylierung kann vorteilhaft nach an sich bekannten Verfahren, beispielsweise dem Verfahren von EP-A 115 387, durchgeführt werden.

Die Esterspaltung der erfindungsgemäß hergestellten Polyoxyalkylenglykol-Monoester zu den betreffenden Polyoxyalkylenglykolen kann in allen Fällen, findet sie durch saure oder alkalische Hydrolyse, durch Umesterung Decarbonylierung oder durch Hydrogenolyse statt, diskontinuierlich oder kontinuierlich, in für die betreffende Verfahrensweise üblicherweise verwendeten Reaktoren ausgeführt werden, beispielsweise in Rührkesseln, Schlaufenreaktoren oder Rührautoklaven bei der diskontinuierlichen Verfahrensweise oder in Rohrreaktoren oder Reaktorkaskaden bei der kontinuierlichen Betriebsweise.

Das erfindungsgemäße Verfahren liefert Polyoxyalkylenglykole auf THF-Basis und insbesondere Poly-THF mit sehr niedriger Farbzahl. Da diese Polyoxyalkylenglykole im erfindungsgemäßen Verfahren aus dem betreffenden, erfindungsgemäß hergestellten Polyoxyalkylenglykol-Monoethern bzw. -Monoestern freigesetzt werden, welche wiederum nach der erfindungsgemäßen Verfahrensweise bezüglich ihres mittleren Molekulargewichts gezielt und mit einer engen Molekulargewichtsverteilung erhältlich sind, ermöglicht das erfindungsgemäße Verfahren erstmals die gezielte, wirtschaftliche Herstellung von Polyoxyalkylenglykolen bestimmter mittlerer Molekulargewichte und mit einer engen Molekulargewichtsverteilung.

Beispiele

Die mittleren Molmassen ($M_n$) der gemäß den Beispielen hergestellten Polymeren wurden mittels Gelpermeationschromatographie bestimmt, wobei ein standardisiertes Polystyrol zur Eichung verwendet wurde. Aus den erhaltenen Chromatogrammen wurde das Zahlenmittel $M_n$ nach der Gleichung

$$M_n = \frac{\Sigma \ ci}{\Sigma \frac{ci}{M_i}}$$

berechnet, in der $c_i$ für die Konzentration der einzelnen Polymerspezies i im erhaltenen Polymergemisch steht und in der $M_i$ das Molekulargewicht der einzelnen Polymerspezies i bedeutet. Die Molekulargewichtsverteilung, im folgenden als Dispersität D bezeichnet, wurde aus dem Verhältnis von Gewichtsmittel des Molekulargewichts ($M_w$) und Zahlenmittel des Molekulargewichtes ($M_n$) nach der Gleichung

$$\frac{M_w}{M_n} = D$$

errechnet. Das Gewichtsmittel $M_w$ wurde aus den erhaltenen Chromatogrammen mit Hilfe der Formel

$$M_w = \frac{\Sigma \ c_i \ M_i}{\Sigma \ c_i}$$

bestimmt. Die zur Bestimmung der Dispersität herangezogenen Proben waren nicht wie allgemein üblich einer vorherigen Kurzweg-Destillation zur Entfernung flüchtiger, kurzkettiger Polymere unterzogen worden, weshalb ein höherer Wert für D ermittelt wurde, als er nach einer vorausgegangenen Kurzweg-Destillation zu erwarten gewesen wäre.

Alle zur Herstellung der Polyoxyalkylenglykol-Monoether bzw. -Monoester eingesetzten Reaktanten waren wasser- und peroxidfrei.

Beispiel 1

1000 g THF, das 8 Gew.-% tert.-Butanol enthielt, wurde in einer Apparatur wie sie in der Figur dargestellt ist, unter einer Stickstoffatmosphäre 4 Stunden lang mit 500 g wasserfreier Dodecawolframatophosphorsäure bei 60°C intensiv gerührt. Anschließend wurden dem Reaktor bei 60°C unter Rühren stündlich 250 g THF, welches 2 Gew.-% tert.-Butanol enthielt, zugeführt und die gleiche Menge an Oberphase aus dem Reaktor ausgetragen. Der THF-Umsatz betrug 13 %. Der Reaktionsaustrag wurde destillativ von THF und tert.-Butanol befreit, und der als Sumpfprodukt anfallende, noch Restmengen an Dodecawolframatophosphorsäure enthaltende, klare, viskose Polyoxibutylenglykol-Mono-tert.-butylether anschließend bei einem Druck von 0,5 mbar 1 Stunde auf 80°C erhitzt. Während dieser Behandlung entstand aus dem eingesetzten Polyoxybutylenglykol-Mono-tert.-butylether Polyoxybutylenglykol eines mittleren Molekulargewichts ($M_n$) von 2400 und einer Dispersität von 1,7, welches nach Neutralisation und Extraktion der Heteropolysäure mittels verdünnter Natronlauge in praktisch quantitativer Ausbeute erhalten wurde.

Beispiel 2

1000 g THF, das 10 Gew.-% Essigsäure enthielt, wurden in einer Apparatur, wie sie in der Figur abgebildet ist, unter einer Stickstoffatmosphäre 4 Stunden lang mit 500 g wasserfreien Dodecawolframatokieselsäure bei 60°C gerührt. Anschließend wurden dem Reaktor stündlich 250 g THF, welches 3,5 Gew.-% Essigsäure enthielt, zugeführt und die gleiche Menge an oberer Phase aus dem Reaktor ausgetragen. Der THF-Umsatz betrug 12 %. Der Reaktionsaustrag wurde zur Entfernung von restlichem THF und Essigsäure bei vermindertem Druck destilliert.

Das erhaltene Polyoxybutylenglykol-monoacetat wurde mit dem gleichen Volumen Methanol und soviel Natriummethanolat versetzt, daß eine deutlich alkalische Lösung entstand. Diese Mischung wurde in einer Destillationsapparatur erhitzt und der sich dabei bildende Essigsäuremethylester laufend aus der Reaktionsmischung abdestilliert. Nach beendeter Umesterung wurde die Reaktionsmischung mit Phosphorsäure neutralisiert, das restliche Methanol abdestilliert und der polymere Rückstand zur Entfernung unlöslicher Salze filtriert. Das mittlere Molekulargewicht des erhaltenen Polyoxybutylenglykols wurde über die Bestimmung der Hydroxylgruppenzahl (OH-Zahl, Deutsches Arzneimittelbuch, 7. Auflage; Kapitel V 3.4.3) ermittelt und betrug 966. Seine Dispersität hatte den Wert 1,7.

Beispiel 3

Es wurde wie in Beispiel 2 verfahren, jedoch wurden anstelle der Dodecawolframatokieselsäure 500 g wasserfreie Dodecawolframatophosphorsäure verwendet. Die Aufarbeitung erfolgte analog Beispiel 2. Das mittlere Molekulargewicht des erhaltenen Polyoxybutylenglykols wurde über die Bestimmung der OH-Zahl ermittelt und betrug 1056. Das Poly-THF wurde in einer Ausbeute von 21 % erhalten.

**Patentansprüche**

1. Verfahren zur Herstellung von Polyoxyalkylenglykolen, dadurch gekennzeichnet, daß man Tetrahydrofuran oder Mischungen von Tetrahydrofuran mit insgesamt bis zu 95 mol-%, bezogen auf die eingesetzte Menge an Tetrahydrofuran, eines oder mehrerer Comonomerer aus der Gruppe der cyclischen Ether und Acetale in Abwesenheit von Wasser und in Gegenwart eines einwertigen Alkohols oder einer Monocarbonsäure mit Hilfe eines wasserfreien Heteropolysäure-Katalysators kontinuierlich in einem flüssigen Zweiphasensystem polymerisiert, dabei einen Alkohol- oder Monocarbonsäuregehalt von 0,1 bis 15 mol/mol Heteropolysäure in der Katalysatorphase einstellt und aus den erhaltenen Polyoxyalkylenglykol-Monoethern oder Polyoxyalkylenglykol-Monoestern das Polyoxyalkylenglykol durch Spaltung der Monoether- oder Mono-ester-Bindung freisetzt.

2. Verfahren nach Anspruch 1, dadurch gekennzeichnet, daß man als cyclischen Ether Tetrahydrofuran zur Polymerisation einsetzt und aus den erhaltenen Polyoxybutylenglykol-Monoethern oder Polyoxybutylenglykol-Monoestern Polyoxybutylenglykol durch Spaltung der Monoether- oder Monoester-Bindung freisetzt.

3. Verfahren nach Anspruch 1, dadurch gekennzeichnet, daß man als einwertigen Alkohol einen sekundären oder tertiären Alkohol einsetzt und das Polyoxyalkylenglykol aus den erhaltenen Polyoxyalkylenglykol-Monoethern mit Hilfe eines sauer wirkenden Katalysators freisetzt.

4. Verfahren nach Anspruch 1, dadurch gekennzeichnet, daß man als einwertigen Alkohol tert.-Butanol einsetzt und aus dem erhaltenen Polyoxyalkylenglykol-Mono-tert.-butylether das Polyoxyalkylenglykol mittels sauer wirkender Katalysatoren freisetzt.

5. Verfahren nach Anspruch 1, dadurch gekennzeichnet, daß man als einwertigen Alkohol Benzylalkohol einsetzt und aus dem erhaltenes Polyoxyalkylenglykol-Monobenzylether das Polyoxyalkylenglykol durch Hydrogenolyse freisetzt.

6. Verfahren nach Anspruch 1, dadurch gekennzeichnet, daß man eine Monocarbonsäure einsetzt und aus dem erhaltenen Polyoxyalkylenglykol-Monoestern das Polyoxyalkylenglykol durch die basen- oder säurekatalysierte Solvolyse der Estergruppe freisetzt.

7. Verfahren nach Anspruch 1, dadurch gekennzeichnet, daß man eine Monocarbonsäure einsetzt und aus den erhaltenen Polyoxyalkylenglykol-Monoestern das Polyoxyalkylenglykol durch die Reduktion der Estergruppe freisetzt.

8. Verfahren nach Anspruch 1, dadurch gekennzeichnet, daß man die cyclischen Ether bei Temperaturen von 0 bis 150°C polymerisiert.

**Claims**

1. A process for the preparation of polyoxyalkylene glycol, wherein tetrahydrofuran or a mixture of tetrahydrofuran with a total of not more than 95 mol %, based on the amount of tetrahydrofuran used, of one or more comonomers from the group consisting of the cyclic ethers and acetals is polymerized continuously in a liquid two-phase system in the absence of water and in the presence of a monohydric alcohol or of a monocarboxylic acid with the aid of an anhydrous heteropoly acid catalyst, an alcohol or monocarboxylic acid content of from 0.1 to 15 mol/mol of heteropoly acid being established in the catalyst phase, and the polyoxyalkylene glycol is liberated from the resulting polyoxyalkylene glycol monoether or polyoxyalkylene glycol monoester by cleavage of the monoether or monoester bond.

2. A process as claimed in claim 1, wherein tetrahydrofuran is used as the cyclic ether for the polymerization, and polyoxybutylene glycol is liberated from the resulting polyoxybutylene glycol monoether or polyoxybutylene monoester by cleavage of the monoether or monoester bond.

3. A process as claimed in claim 1, wherein a secondary or tertiary alcohol is used as the monohydric alcohol and the polyoxyalkylene glycol is liberated from the resulting polyoxyalkylene glycol monoether with the aid of an acidic catalyst.

4. A process as claimed in claim 1, wherein tert-butanol is used as the monohydric alcohol, and the polyoxyalkylene glycol is liberated from the resulting polyoxyalkylene glycol mono-tert-butyl ether by means of an acidic catalyst.

5. A process as claimed in claim 1, wherein benzyl alcohol is used as the monohydric alcohol, and the polyoxyalkylene glycol is liberated from the resulting polyoxyalkylene glycol monobenzyl ether by hydrogenolysis.

6. A process as claimed in claim 1, wherein a monocarboxylic acid is used, and the polyoxyalkylene glycol is liberated from the resulting polyoxyalkylene glycol monoester by base-catalyzed or acid-catalyzed solvolysis of the ester group.

7. A process as claimed in claim 1, wherein a monocarboxylic acid is used, and the polyoxyalkylene glycol is liberated from the resulting polyoxyalkylene glycol monoester by reduction of the ester group.

8. A process as claimed in claim 1, wherein the cyclic ether is polymerized at from 0 to 150°C.

**Revendications**

1. Procédé de fabrication de polyoxyalkylèneglycols, caractérisé en ce que l'on polymérise de façon continue, dans un système liquide à deux phases, du tétrahydrofurane ou des mélanges de tétrahydrofurane avec en tout jusqu'à 95 % en mole, par rapport à la quantité introduite de tétrahydrofurane, d'un ou plusieurs comonomères du groupe des éthers cycliques et des acétals, en l'absence d'eau et en présence d'un alcool monovalent ou d'un acide monocarboxylique, à l'aide d'un catalyseur anhydre d'hétéropolyacide, on règle la teneur en alcool ou en acide monocarboxylique de 0,1 à 15 moles/mole d'hétéropolyacide dans la phase du catalyseur, et on libère le polyoxyalkylèneglycol des polyoxyalkylèneglycol-monoéthers ou des polyoxyalkylèneglycol-monoesters obtenus, par coupure de la liaison monoéther ou monoester.

2. Procédé selon la revendication 1, caractérisé en ce que l'on utilise du tétrahydrofurane en tant qu'éther cyclique pour la polymérisation et qu'on libère du polyoxybutylèneglycol des polyoxybutylèneglycol-monoéthers ou des polyoxybutylèneglycol-monoesters obtenus, par coupure de la liaison monoéther ou monoester.

3. Procédé selon la revendication 1, caractérisé en ce que l'on utilise un alcool secondaire ou tertiaire en tant qu'alcool monovalent et on libère le polyoxyalkylèneglycol des polyoxyalkylèneglycol-monoéthers obtenus à l'aide d'un catalyseur à action acide.

4. Procédé selon la revendication 1, caractérisé en ce que l'on utilise du tert.-butanol en tant qu'alcool monovalent et on libère le polyoxyalkylèneglycol du polyoxyalkylèneglycol-mono-tert.-butyléther obtenu au moyen de catalyseurs à action acide.

5. Procédé selon la revendication 1, caractérisé en ce que l'on utilise de l'alcool benzylique en tant qu'alcool monovalent et on libère le polyoxyalkylèneglycol du polyoxyalkylèneglycol-mono(éther benzylique) obtenu, par hydrogénolyse.

6. Procédé selon la revendication 1, caractérisé en ce que l'on ajoute un acide monocarboxylique et en ce qu'on libère le polyoxyalkylène des polyoxyalkylèneglycol-monoesters obtenus, par solvolyse des groupements ester, catalysée par des bases ou des acides.

7. Procédé selon la revendication 1, caractérisé en ce que l'on ajoute un acide monocarboxylique et en ce qu'on libère le polyoxyalkylène des polyoxyalkylèneglycol-monoesters obtenus, par réduction des groupements ester.

8. Procédé selon la revendication 1, caractérisé en ce que l'on polymérise les éthers cycliques à des températures de 0 à 150°C.